# EUROPEAN PATENT SPECIFICATION

(11) **EP 3 795 032 B1**
(45) Date of publication and mention of the grant of the patent: **18.06.2025**
(21) Application number: 20188690.0
(22) Date of filing: 30.07.2020
(51) Int. Cl.: A47B 53/02, B65G 1/00

(54) **SYSTEM FOR COMPENSATION OF SEISMIC SHOCKS FOR SHELVES**
SYSTEM ZUM AUSGLEICH VON SEISMISCHEN BEWEGUNGEN FÜR REGALE
SYSTÈME D'AMORTISSEMENT DES SECOUSSES SISMIQUES POUR ÉTAGÈRES

(30) Priority: 23.09.2019 IT 201900017030
(43) Date of publication of application: 24.03.2021
(73) Proprietor: Compatt S.r.L., 20090 Segrate (MI) (IT)
(72) Inventor: DE RIZZO, Flavio, 20090 Segrate (MI) (IT)
(74) Representative: Lunati & Mazzoni S.r.L.

(56) References cited:
- GB-A- 2 454 544
- US-A- 4 789 210
- US-A1- 2011 062 100

## Description

The present invention relates to an anti-seismic system for the movement of shelves of the type specified in the preamble of the first claim.

In particular, the present invention relates to a system designed to prevent shelves, for example pallet racking, from tipping over in the event of an earthquake and within compactable systems.

A similar system is described in patent application GB-A-2454544.

As is known, compactable systems generally include a plurality of large-sized mobile shelves on one or more guides so that they can be compacted.

These systems are very efficient within the storage spaces since, when the shelves are compacted or close to each other, they allow the overall space to be significantly reduced.

Therefore, such systems can provide simple guides, or rails, on which the shelves can translate in a controlled manner, for example by means of wheels, or they can include particular connectors suitable for connecting the guide and shelves.

The described prior art has a few major drawbacks.

In particular, most compactable systems are not earthquake-proof. Therefore, in the event of an earthquake, the shelves are subject to overturning effects, especially in the direction transverse to the guides, which can cause the contents of the shelves, as well as the shelves themselves, to fall and break.

To overcome the aforementioned long-standing problem, some systems include special connectors designed to prevent the shelves from tipping over.

For example, these connectors may include slides that can translate on rails parallel to the guide. Therefore, some seismic systems comprise guides for the movement of the shelves, and a slide, for each guide, constrained to a shelf and suitable for preventing said shelf from tipping over.

In this respect, the slide can include a T-element trapped inside a fixed rail.

The above-mentioned technique also has a few major drawbacks.

In particular, anti-seismic systems thus created include additional elements, i.e. slides and rails parallel to the guide, which must be correctly positioned, and therefore entail significant material costs and additional labour.

Furthermore, due to the simultaneous presence of side-by-side guides and rails, the overall dimensions on the ground increase, and in some cases can lead to dimensioning and installation problems.

Patent application US-A-5013101 describes a further configuration in which the guide comprises a recess, which is arranged laterally with respect to the surface for the movement of the shelves and can house an L-shaped element, which, in turn, is constrained to the shelf, so as to prevent the shelf from slipping off the guide.

However, this technique also has a few major drawbacks.

First of all, the configuration described above is very inefficient for large shelves, especially when fully loaded. In fact, the L-shaped connecting element is not sufficient to prevent possible overturning of the shelves in the presence of seismic shocks.

Furthermore, even when the shelves are small in size, this system is able to prevent overturning only when using always two L-connectors arranged specularly at the ends of each individual shelf.

In this context, the technical task underlying the present invention is to devise an anti-seismic system for the movement of shelves, which is capable of substantially obviating at least some of the above-mentioned drawbacks.

Within the scope of said technical task, a major object of the invention is to obtain an anti-seismic system for the movement of shelves, which is able to prevent the overturning of shelves of any size or weight.

Another major object of the invention is to provide an anti-seismic system for the movement of shelves, which can reduce installation and maintenance costs both in economic and labour terms.

In conclusion, a further task of the invention is to provide an anti-seismic system capable of integrating, in a single autonomous guide, the moving and anti-overturning functions.

The technical task and the specified objects are achieved by means of an anti-seismic system for the movement of shelves as claimed in the appended claim 1. Preferred technical solutions are set forth in the dependent claims.

The features and advantages of the invention will be apparent from the detailed description of preferred embodiments of the invention, with reference to the accompanying drawings, in which:
**Fig. 1** shows a cross-sectional view, perpendicular to the guide direction, of an anti-seismic system for the movement of shelves according to the invention;
**Fig. 2** shows a sectional view of the interference portion of the connector of an anti-seismic system for the movement of shelves according to the invention;
**Fig. 3** is a top longitudinal view of the interference portion of the connector of an anti-seismic system for the movement of shelves according to the invention; and
**Fig. 4** shows a simplified model of a shelf arranged on two parallel guides of an anti-seismic system for the movement of shelves according to the invention.

In this document, the measures, values, shapes and geometric references (such as perpendicularity and parallelism), when used with words like "about" or other similar terms such as "approximately" or "substantially", are to be understood as except for measurement errors or inaccuracies due to production and/or manufacturing errors and, above all, except for a slight divergence from the value, measure, shape or geometric reference with which it is associated. For example, if associated with a value, such terms preferably indicate a divergence of no more than 10% from the value itself.

Furthermore, when used, terms, such as "first", "second", "higher", "lower", "main", and "secondary" do not necessarily identify an order, relationship priority, or relative position, but they can simply be used to distinguish different components more clearly from one another.

Unless otherwise stated, the measurements and data reported in this text shall be considered as performed in International Standard Atmosphere ICAO (ISO 2533:1975).

With reference to the Figures, the anti-seismic system for the movement of shelves according to the invention is indicated as a whole by the numeral **1.**

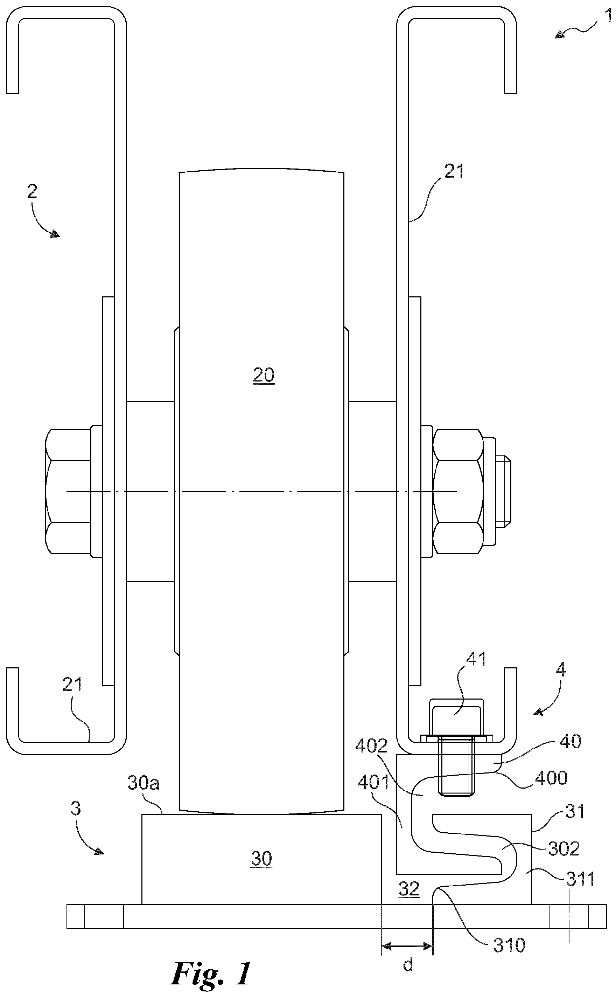

The anti-seismic system 1 is mainly, but not exclusively, configured to prevent the overturning of shelves. Therefore, it is mainly used in warehouses with compactable shelves, or where the shelves can be moved so as to reduce the space occupied by said shelves. The system 1 is therefore preferably arranged on a floor or a floor support, as shown in Fig. 1.

The system 1 therefore comprises at least one shelf **2.** Of course, preferably, the system 1 comprises a plurality of shelves 2, however, essentially, for the purposes of the invention it is even sufficient for the system 1 to include one shelf 2 only. The shelf 2 can be of any type and size. It can include one or more shelves, it can be either high or not. Preferably, the shelf 2 is of the type found inside systems for compactable stockrooms.

Preferably, since the shelf 2 is movable, it comprises movement means **20.**

The movement means 20 are designed to allow the movement of the shelf 2. In particular, they allow its movement along at least one direction.

In this regard, the movement means 20 can include rolling elements, for example spheres, placed under the shelf 2, or tracks or even wheels.

Preferably, the movement means 20 include a plurality of wheels aligned along a predetermined trajectory. Preferably, therefore, the movement means 20 provide sliding blocks which are known in the present state of the art and already present on most shelves of compactable systems.

In addition, the shelf 2 can also include at least one bulkhead **21.** The bulkhead 21 is preferably side by side with the movement means 20 along the direction of extension of the movement means 20.

This bulkhead 21 can therefore be continuous along the whole extension, or segmented, for example with segments placed next to each wheel of the movement means 20.

Furthermore, the shelf 2 can also include a second bulkhead 21 so that each side of the movement means 20 is covered, at least partially, by one of the bulkheads 21.

The system 1 further comprises a guide **3.**

The guide 3 is substantially designed to guide the shelf 2. In greater detail, it is designed to guide the movement means 20 of the shelf 2. In this regard, therefore, the guide 3 defines a guide direction **3a** along which the shelf 2 can translate.

The guide direction 3a can be straight or even curved. Preferably, the guide direction 3a is straight. Furthermore, it extends uninterruptedly so as to allow the movement means 20 to move unhindered. Of course, if the movement means 20 include aligned wheels, the latter are aligned along the guide direction 3a.

Similarly, if the bulkhead 21 is present, it extends side by side with the movement means 20, preferably along the guide direction 3a.

Preferably, the guide 3 comprises a support portion **30** and a constraint portion **31.** The support portion 30 is preferably the portion on which the movement means 20 slide. Therefore, preferably, the support portion 30 is arranged along the guide direction 3a and is designed to support the movement means 20.

In particular, the support portion 30 defines a support surface **30a.**

The support surface 30a is designed to support the movement means 20, and therefore the latter move along the support surface 30a.

It is preferably flat, however, also depending on the ground on which the guide 3 is mounted, it could have curvatures, although preferably minor curvatures to avoid hindering the travel of the movement means 20.

The constraint portion 31 also extends along the guide direction 3a.

Substantially, therefore, the constraint portion 31 extends parallel to the constraint portion 30. Therefore, it is placed side by side with and spaced apart from the constraint portion 30 along the guide direction 3a.

The support portion 30 and the constraint portion 31 define a reciprocal distance d. This distance d, of course, can vary according to the size of the shelves 2. The distance d is in the range of 10 mm to 30 mm.

In any case, thanks to the aforementioned configuration, the constraint portion 31 creates, with the support portion 30, at least one groove **32.**

The groove 32 therefore also extends along the guide direction 3a.

Furthermore, the groove 32 is determined at least by the space between the constraint portion 31 and the support portion 30. Preferably, the groove 32 also extends beyond the aforementioned space, as better specified below.

Therefore, preferably, the portions 30,31 are laid on a floor, or a floor support, and are mutually distinct and separated on said floor, or said floor support, by at least part of the groove 32.

The system 1 also includes a connector **4.**

The connector 4 is preferably constrained to the shelf 2. Furthermore, it can interact with the guide 3 at least when the system 1 is subjected to seismic shocks.

Preferably, in this regard, the connector 4 includes at least one interference portion **40.**

The interference portion 40 is preferably configured to be at least partially housed within the groove 32.

Advantageously, in fact, the constraint portion 31 and the interference portion 40 define, along a plane perpendicular to the guide direction 3a, opposite and mutually linked substantially C-shaped profiles.

In this way, they provide at least two points of mutual contact between the connector 4 and the guide 3 when the system 1 is subjected to seismic shocks.

The terms "opposite" and "mutually linked" are intended to mean that the profiles, as shown in Fig. 1, are arranged specularly, staggered, and so that one of the ends of each C is inserted inside the cavity provided by the other C.

Furthermore, the interference portion 40 is designed to contact the guide 3 preferably only when the system 1 is subjected to seismic shocks.

In this regard, therefore, the interference portion 40 and the constraint portion 31 are not in contact with each other when the system 1 is not subjected to seismic shocks.

In the preferred embodiment, the interference portion 40 and the constraint portion 31 define specific geometries.

In particular, the interference portion 40 defines a maximum thickness **s.**

The maximum thickness s, like the distance d, can vary according to the size of the system 1, and in particular of the shelves 2. For example, the maximum thickness s can be in the range of 7 mm to 15 mm.

Preferably, in any case, the maximum thickness s is less than the distance d.

Furthermore, the constraint portion 31 comprises first chamfers **310** and the interference portion 40 comprises second chamfers **400.**

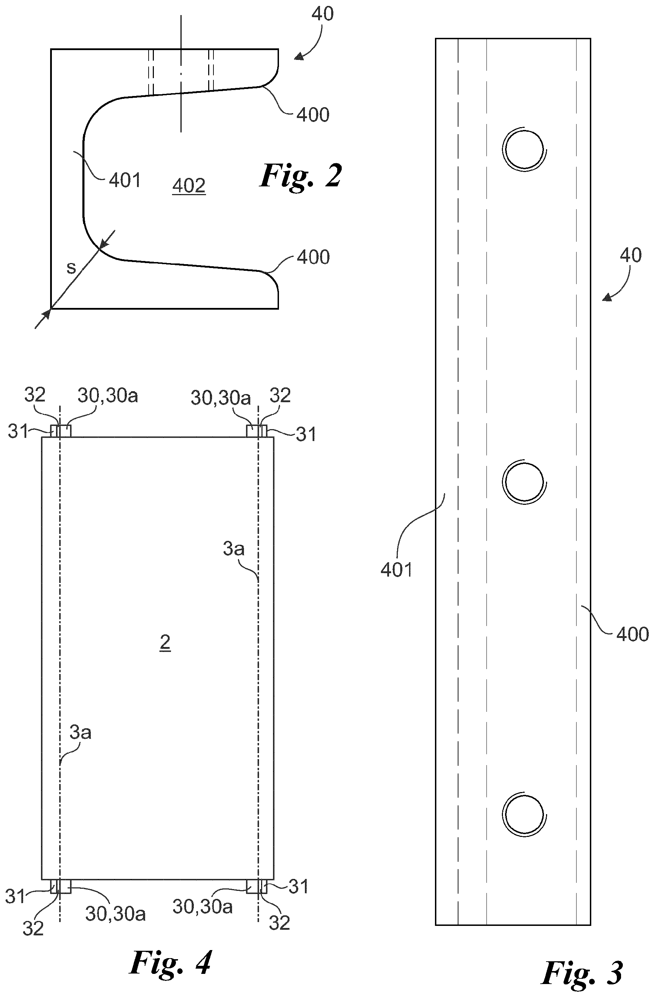

Both the first chamfers 300 and the second chamfers 400 are arranged in the internal areas of the respective ends of the profiles, as clearly shown in Fig. 1-2. Therefore, if it is desired to insert the interference portion 40 inside the guide 3 already fully installed, the chamfers 300, 400 allow an easier insertion.

Furthermore, the constraint portion 31 defines a first central area **311** and the interference portion 40 defines a second central area **401.**

The central areas 311, 401 are substantially defined by the intermediate portion, i.e. far from the ends, of the C-shaped profiles. Basically, therefore, the central areas 311, 401 delimit the belly of the C-shaped profile.

Preferably, the second central area 401 is larger than the first central area 311 along a direction perpendicular to the guide direction 3a.

Furthermore, the constraint portion 31 defines a first cavity **302** and the interference portion 40 defines a second cavity **402.**

The cavities 302 and 402 are substantially the portions of space partially surrounded by the C-shaped profiles. Therefore, the first cavity 302 is preferably part of the groove 32. The groove 32 is therefore defined by the portion of space enclosed by the portions 30, 31 and by the first cavity 302.

In addition to the above, the first cavity 302 is substantially divergent starting from the first central area 311 towards the ends of the profile of the constraint portion 31. Similarly, the second cavity 402 is divergent starting from the second central area 401 towards the ends of the profile of the interference portion 40.

The guide 3 can also include some further peculiarities.

Preferably, in fact, the constraint portion 31 defines a height identical to the support portion 30 along a direction perpendicular to the guide direction 3a.

Furthermore, the connector 4 can be constrained to the shelf at various points. Preferably, in addition to the coupling portion 40, it includes coupling means **41.** The coupling means 41 are configured to constrain the interference portion 40 to the shelf 2. In greater detail, the coupling means 41 constrain the interference portion 40 to the bulkhead 21.

The coupling means 41 can also perform a further function. They preferably protrude towards the inside of the profile of the interference portion 40 so as to create one of said contact points when the system 1 is subjected to seismic shocks.

Therefore, the system 1 benefits from a plurality of possible points of contact between the connector 4 and the guide 3 so as to avoid any possibility of overturning.

In conclusion, the interference portion 40 can extend, parallel to the constraint portion 31, along the guide direction 3a. Or, alternatively, the interference portion 40 can extend along the guide direction 3a with discontinuity, i.e. in segments.

Preferably, if the movement means 20 include wheels, the interference portion 40 has a length, alongside at least one of the wheels, along said guide direction 3a, which is approximately equal to the diameter of the wheel.

Of course, preferably, the interference portions 40 flank each wheel.

The operation of the anti-seismic system for the movement of shelves 1, previously described in structural terms, is as follows.

Basically, once a plurality of guides 3, for example two, have been laid on the floor, a plurality of shelves 2 can be constrained to the guides 3. Preferably, each of the shelves 2 is constrained to two adjacent guides 3.

When the system 1 is subjected to seismic shocks, the conformations of the interference portion 40 and the constraint portion 31 allow the availability of at least two points of contact between the connector 4 and the guide 3 so as to block or dampen any listing, even of great intensity, which could lead to overturning of the shelves 2.

The anti-seismic system for the movement of shelves 1 according to the invention achieves important advantages.

In fact, the system prevents the overturning of the shelves for any load condition and, in this case, for vibratory loads due to seismic shocks.

Moreover, a further advantage of the invention is that the structures of the guide 3 and the connector 4 are considerably simplified, thereby allowing significant savings on installation, maintenance and even costs of construction of the system 1.

In fact, the system 1 allows a single guide 3 to integrate all the functions, which were previously required of separate devices with an increase in space and installation times.

In conclusion, the applicant was able to ascertain through specific load tests that the system 1 according to the invention guarantees optimal efficiency, previously achieved only through separate guides and connectors on the ground, yet with high cost-effectiveness.

The invention is susceptible of variations falling within the scope of the inventive concept as defined by the claims.

## Claims

1. Floor, or floor support, with an anti-seismic system (1) for the movement of shelves comprising:
- at least one shelf (2) including movement means (20) designed to allow the movement of said shelf (2) along at least one direction,
- at least one guide (3) defining at least one guide direction (3a) along which said shelf (2) can translate, and including:
- a support portion (30) arranged along said guide direction (3a) and designed to support said movement means (20) along a support surface (30a), and
- a constraint portion (31) extending along said guide direction (3a) parallel to said support portion (30) so as to create at least one groove (32) extending along said guide direction (3a),
- a connector (4) constrained to said shelf (2) and including at least one interference portion (40) configured to be at least partially housed within said groove (32),
- said constraint portion (31) and said interference portion (40) defining, along a plane perpendicular to said guide direction (3a), opposite and mutually linked substantially C-shaped profiles so as to achieve at least two points of mutual contact between said connector (4) and said guide (3) when said system (1) is subjected to seismic shocks,
- said portions (30, 31) are laid on said floor, or said floor support, and are mutually distinct and separated on said floor or said floor support, by at least part of said groove (32) placed side by side spaced reciprocally apart along said guide direction (3a) defining a reciprocal distance (d) and said system being **characterized in that** said reciprocal distance (d) can be adjusted according to the size of said shelf (2) in a range of 10 mm to 30 mm

2. Floor, or floor support, according to claim 1, wherein said interference portion (40) and said constraint portion (31) are not in contact with each other when said system (1) is not subjected to seismic shocks.

3. Floor, or floor support, according to claim 1, wherein said interference portion (40) defines a maximum thickness (s) that is less than said distance (d).

4. Floor, or floor support, according to at least one of the preceding claims, wherein said profiles of said constraint portion (31) and said interference portion (40) comprise first chamfers (310) and second chamfers (400), respectively, in the internal areas of the respective ends of said profiles.

5. Floor, or floor support, according to at least one of the preceding claims, wherein said profiles of said constraint portion (31) and said interference portion (40) define a first central area (311) and a second central area (401), respectively, said second central area (401) being larger than said first central area (311) along a direction perpendicular to said guide direction (3a).

6. Floor, or floor support, according to at least one of the preceding claims, wherein said profiles of said constraint portion (31) and said interference portion (40) define a first cavity (302) and a second cavity (402), respectively, which diverge starting from said first central area (311) and said second central area (401), respectively, towards the respective ends of said profiles, said first cavity (302) defining part of said groove (32).

7. Floor, or floor support, according to at least one of the preceding claims, wherein said constraint portion (31) defines a height identical to said support portion (30) along a direction perpendicular to said guide direction (3a).

8. Floor, or floor support, according to at least one of the preceding claims, wherein said shelf (2) comprises at least one bulkhead (21) alongside said movement means (2) along said guide direction (3a), said connector (4) including coupling means (41) configured to constrain together said interference portion (40) and said bulkhead (21).

9. Floor, or floor support, according to at least one of the preceding claims, wherein at least part of said coupling means (41) protrudes towards the inside of said profile of said interference portion (40) so as to form one of said contact points when said system (1) is subjected to seismic shocks.

10. Floor, or floor support, according to at least one of the preceding claims, wherein said movement means (20) include a plurality of wheels aligned along said guide direction (3a), and said interference portion (40) has a length, alongside at least one of said wheels along said guide direction (3a), which is approximately equal to the diameter of said wheel.

## Patentansprüche

1. Boden oder Bodenstütze mit einem seismischen Schutzsystem (1) zur Bewegung von Regalen, umfassend:
- mindestens ein Regal (2), das Bewegungselemente (20) umfasst, die dazu ausgelegt sind, die Bewegung des genannten Regals (2) in mindestens einer Richtung zu ermöglichen,
- mindestens eine Führung (3), die mindestens eine Führungsrichtung (3a) definiert, entlang der sich das genannte Regal (2) bewegen kann, und folgendes umfasst:
- einen Trägerabschnitt (30), der entlang der genannten Führungsrichtung (3a) angeordnet ist und dazu ausgelegt ist, die genannten Bewegungselemente (20) entlang einer Trägeroberfläche (30a) zu tragen, und
- einen Halteabschnitt (31), der entlang der genannten Führungsrichtung (3a) parallel zu dem genannten Trägerabschnitt (30) verläuft, um mindestens eine Nut (32) zu bilden, die sich entlang der genannten Führungsrichtung (3a) erstreckt, einen Verbinder (4), der mit dem genannten Regal (2) verbunden ist und mindestens einen Interferenzabschnitt (40) umfasst, der dazu konfiguriert ist, zumindest teilweise innerhalb der genannten Nut (32) untergebracht zu sein,
- der genannte Halteabschnitt (31) und der genannte Interferenzabschnitt (40) definieren in einer zur genannten Führungsrichtung (3a) senkrechten Ebene einander gegenüberliegende und miteinander verbundene, im Wesentlichen C-förmige Profile, um bei seismischen Erschütterungen des Systems (1) mindestens zwei gegenseitige Kontaktpunkte zwischen dem genannten Verbinder (4) und der genannten Führung (3) zu gewährleisten,
- die genannten Abschnitte (30, 31) liegen auf dem genannten Boden oder der genannten Bodenstütze auf und sind auf dem genannten Boden oder der genannten Bodenstütze voneinander getrennt und unterschieden durch mindestens einen Teil der genannten Nut (32), die nebeneinander und mit gegenseitigem Abstand entlang der genannten Führungsrichtung (3a) angeordnet ist, wodurch ein gegenseitiger Abstand (d) definiert wird, wobei das System **dadurch gekennzeichnet ist, dass** der genannte gegenseitige Abstand (d) je nach Größe des genannten Regals (2) in einem Bereich von 10 mm bis 30 mm einstellbar ist.

2. Boden oder Bodenstütze nach Anspruch 1, wobei der genannte Interferenzabschnitt (40) und der genannte Halteabschnitt (31) nicht miteinander in Kontakt stehen, wenn das genannte System (1) keinen seismischen Erschütterungen ausgesetzt ist.

3. Boden oder Bodenstütze nach Anspruch 1, wobei der genannte Interferenzabschnitt (40) eine maximale Dicke (s) definiert, die kleiner ist als der genannte Abstand (d).

4. Boden oder Bodenstütze nach mindestens einem der vorhergehenden Ansprüche, wobei die genannten Profile des Halteabschnitts (31) und des Interferenzabschnitts (40) jeweils erste Fasen (310) und zweite Fasen (400) in den inneren Bereichen der jeweiligen Enden der genannten Profile umfassen.

5. Boden oder Bodenstütze nach mindestens einem der vorhergehenden Ansprüche, wobei die genannten Profile des Halteabschnitts (31) und des Interferenzabschnitts (40) jeweils einen ersten zentralen Bereich (311) und einen zweiten zentralen Bereich (401) definieren, wobei der zweite zentrale Bereich (401) größer ist als der erste zentrale Bereich (311) in einer Richtung, die senkrecht zur genannten Führungsrichtung (3a) verläuft.

6. . Boden oder Bodenstütze nach mindestens einem der vorhergehenden Ansprüche, wobei die genannten Profile des Halteabschnitts (31) und des Interferenzabschnitts (40) jeweils eine erste Kavität (302) und eine zweite Kavität (402) definieren, die sich jeweils von dem ersten zentralen Bereich (311) und dem zweiten zentralen Bereich (401) zu den jeweiligen Enden der Profile hin öffnen, wobei die erste Kavität (302) einen Teil der genannten Nut (32) bildet.

7. Boden oder Bodenstütze nach mindestens einem der vorhergehenden Ansprüche, wobei der genannte Halteabschnitt (31) eine mit dem genannten Trägerabschnitt (30) identische Höhe in einer Richtung senkrecht zur genannten Führungsrichtung (3a) definiert.

8. Boden oder Bodenstütze nach mindestens einem der vorhergehenden Ansprüche, wobei das genannte Regal (2) mindestens eine Trennwand (21) neben den genannten Bewegungselementen (2) entlang der genannten Führungsrichtung (3a) umfasst, wobei der genannte Verbinder (4) Kupplungsmittel (41) umfasst, die dazu konfiguriert sind, den genannten Interferenzabschnitt (40) und die genannte Trennwand (21) miteinander zu verbinden.

9. Boden oder Bodenstütze nach mindestens einem der vorhergehenden Ansprüche, wobei mindestens ein Teil der genannten Kupplungsmittel (41) in das Innere des genannten Profils des Interferenzabschnitts (40) hineinragt, um einen der genannten Kontaktpunkte zu bilden, wenn das System (1) seismischen Erschütterungen ausgesetzt ist.

10. Boden oder Bodenstütze nach mindestens einem der vorhergehenden Ansprüche, wobei die genannten Bewegungselemente (20) eine Vielzahl von Rädern umfassen, die entlang der genannten Führungsrichtung (3a) ausgerichtet sind, und der genannte Interferenzabschnitt (40) eine Länge aufweist, die entlang mindestens eines der genannten Räder in der Führungsrichtung (3a) ungefähr dem Durchmesser des genannten Rades entspricht.

## Revendications

1. Sol, ou support de sol, avec un système antisismique (1) pour le déplacement de rayonnages comprenant :
- au moins un rayonnage (2) comprenant des moyens de déplacement (20) conçus pour permettre le déplacement dudit rayonnage (2) selon au moins une direction,
- au moins un guide (3) définissant au moins une direction de guidage (3a) le long de laquelle ledit rayonnage (2) peut se translater, et comprenant :
- une portion de support (30) disposée le long de ladite direction de guidage (3a) et conçue pour supporter lesdits moyens de déplacement (20) le long d'une surface de support (30a), et
- une portion de contrainte (31) s'étendant le long de ladite direction de guidage (3a) parallèlement à ladite portion de support (30) de manière à créer au moins une rainure (32) s'étendant le long de ladite direction de guidage (3a),
- un connecteur (4) contraint audit rayonnage (2) et comprenant au moins une portion d'interférence (40) configurée pour être au moins partiellement logée à l'intérieur de ladite rainure (32),
- ladite portion de contrainte (31) et ladite portion d'interférence (40) définissant, selon un plan perpendiculaire à ladite direction de guidage (3a), des profils sensiblement en forme de C opposés et mutuellement liés de manière à obtenir au moins deux points de contact mutuel entre ledit connecteur (4) et ledit guide (3) lorsque ledit système (1) est soumis à des secousses sismiques,
- lesdites portions (30, 31) étant posées sur ledit sol, ou ledit support de sol, et étant mutuellement distinctes et séparées sur ledit sol ou ledit support de sol, par au moins une partie de ladite rainure (32) placée côte à côte espacée réciproquement le long de ladite direction de guidage (3a) définissant une distance réciproque (d), et ledit système étant **caractérisé en ce que**
ladite distance réciproque (d) peut être ajustée en fonction de la taille dudit rayonnage (2) dans une plage de 10 mm à 30 mm

2. Sol, ou support de sol, selon la revendication 1, dans lequel ladite portion d'interférence (40) et ladite portion de contrainte (31) ne sont pas en contact l'une avec l'autre lorsque ledit système (1) n'est pas soumis à des secousses sismiques.

3. Sol, ou support de sol, selon la revendication 1, dans lequel ladite portion d'interférence (40) définit une épaisseur maximale (s) qui est inférieure à ladite distance (d).

4. Sol, ou support de sol, selon au moins une des revendications précédentes, dans lequel lesdits profils de ladite portion de contrainte (31) et ladite portion d'interférence (40) comprennent respectivement des premiers chanfreins (310) et des seconds chanfreins (400), dans les zones internes des extrémités respectives desdits profils.

5. Sol, ou support de sol, selon au moins une des revendications précédentes, dans lequel lesdits profils de ladite portion de contrainte (31) et ladite portion d'interférence (40) définissent respectivement une première zone centrale (311) et une seconde zone centrale (401), ladite seconde zone centrale (401) étant plus grande que ladite première zone centrale (311) selon une direction perpendiculaire à ladite direction de guidage (3a).

6. Sol, ou support de sol, selon au moins une des revendications précédentes, dans lequel lesdits profils de ladite portion de contrainte (31) et ladite portion d'interférence (40) définissent respectivement une première cavité (302) et une seconde cavité (402), qui divergent à partir de ladite première zone centrale (311) et ladite seconde zone centrale (401), respectivement, vers les extrémités respectives desdits profils, ladite première cavité (302) définissant une partie de ladite rainure (32).

7. Sol, ou support de sol, selon au moins une des revendications précédentes, dans lequel ladite portion de contrainte (31) définit une hauteur identique à ladite portion de support (30) selon une direction perpendiculaire à ladite direction de guidage (3a).

8. Sol, ou support de sol, selon au moins une des revendications précédentes, dans lequel ledit rayonnage (2) comprend au moins une cloison (21) à côté desdits moyens de déplacement (2) le long de ladite direction de guidage (3a), ledit connecteur (4) comprenant des moyens de couplage (41) configurés pour contraindre ensemble ladite portion d'interférence (40) et ladite cloison (21).

9. Sol, ou support de sol, selon au moins une des revendications précédentes, dans lequel au moins une partie desdits moyens de couplage (41) fait saillie vers l'intérieur dudit profil de ladite portion d'interférence (40) de manière à former l'un desdits points de contact lorsque ledit système (1) est soumis à des secousses sismiques.

10. Sol, ou support de sol, selon au moins une des revendications précédentes, dans lequel lesdits moyens de déplacement (20) comprennent une pluralité de roues alignées le long de ladite direction de guidage (3a), et ladite portion d'interférence (40) présente une longueur, à côté d'au moins l'une desdites roues le long de ladite direction de guidage (3a), qui est approximativement égale au diamètre de ladite roue.
